Europäisches Patentamt

European Patent Office

Office européen des brevets

(11) Publication number: **0 424 674 A2**

## EUROPEAN PATENT APPLICATION

(21) Application number: 90118210.5

(22) Date of filing: 21.09.90

(51) Int. Cl.⁵: **B29C 47/14, B29C 47/54**

(30) Priority: 22.09.89 JP 111187/89 U

(43) Date of publication of application:
02.05.91 Bulletin 91/18

(84) Designated Contracting States:
DE FR GB

(71) Applicant: DAIKIN INDUSTRIES, LIMITED
Umeda Center Building 4-12 Nakazaki-nishi
2-chome Kita-ku
Osaka 530(JP)

(72) Inventor: Tamaru, Shinji
3-31-10, Senriyamanishi
Suita-shi, Osaka(JP)
Inventor: Yamamoto, Katsutoshi
2-5-25, Shoya
Settsu-shi, Osaka(JP)
Inventor: Tanaka, Osamu
25-2, Showa-cho
Suita-shi, Osaka(JP)
Inventor: Nishibayashi, Hirofumi
17-A-306, Yamate-cho 3-chome
Suita-shi, Osaka(JP)
Inventor: Inoue, Osamu
39-4, Deguchi, Mozume-cho
Muko-shi, Kyoto(JP)

(74) Representative: Patentanwälte Beetz sen. -
Beetz jun. Timpe - Siegfried -
Schmitt-Fumian- Mayr
Steinsdorfstrasse 10
W-8000 München 22(DE)

(54) Extrusion molding die.

(57) The invention provides an extrusion molding die comprises a cylinder (2) being formed in a housing space (6) having a rectangular section across its axis for receiving therein a paste-form extrusion mass to be pressed by a ram (8); a drawing section (3) continued form the downstream end of housing space (6) and having a rectangular section across its axis, the drawing section (3) being tapered toward its downstream end; a neck portion (4) continued form the downstream end of the drawing section (3) and having a rectangular section across its axis; and a sheet forming section (5) continued form the downstream end of the neck portion (4) and flared toward the downstream end. Thereby, the die can equalize a plurality of layers in thickness and affords ease of extrusion molding.

Fig. 1

## EXTRUSION MOLDING DIE

### BACKGROUND OF THE INVENTION

#### 1. Field of the Invention

The present invention relates to an extrusion molding die for extrusion molding a paste material of, for example, polytetrafluoroethylene (hereinafter referred to as PTFE) or the like to produce a sheet-form multi-layer molded article.

#### 2. Description of the Prior Art

A typical prior-art technique is disclosed in U.S.Pat. No.3,315,020. According to this prior art technique, a mass of PTFE paste is placed in a cylinder of a right circular cylinder configuration and pressed by a hydraulic-actuated ram therein; the pressed mass of paste is then forced through a hollow truncated cone-shaped drawing section and further through a neck portion formed as an orifice having a rectangular section across its axis into a sheet forming section of a flared configuration.

Such prior art technique provides an advantage that it affords easy machining because of the fact that the cylinder is right circular cylinder-shaped, on one hand, while on the other hand it is disadvantageous in that it is difficult to prepare a multi-layer preform composed of two or more layers of PTFE paste to be placed in the cylinder in order to produce a sheet-form multi-layer molded article. Another disadvantage is that since the preform is pressed by the ram in the cylinder, which is then forced through the drawing section into the neck portion in which it is subjected to a change in shape to a rectangular sectional configuration, the flow of the drawn mass is disturbed because of such configurational change and thus a turbulence is produced; therefore it is difficult to equalize the thickness of individual layers of the multi-layer molded article.

### SUMMARY OF THE INVENTION

The object of the invention is to provide an extrusion molding die which can equalize a plurality of layers in thickness and affords ease of extrusion molding.

The invention provides an extrusion molding die comprising
a cylinder being formed in a housing space having a rectangular section across its axis for receiving therein a paste-form extrusion mass to be pressed by a ram;
a drawing section continued form the downstream end of the housing space and having a rectangular section across its axis, the drawing section being tapered toward its downstream end;
a neck portion continued from the downstream end of the drawing section and having a rectangular section across its axis; and
a sheet forming section continued from the downstream end of the neck portion and flared toward the downstream end.

According to the invention, the space for receiving a paste-form extrusion mass to be pressed by the ram in the cylinder is rectangular in its sectional configuration taken across its axis, and the drawing section and the neck portion are present in continuation on the downstream side of the cylinder. Both the drawing section and the neck portion also have a rectangular section across their respective axes, and from the downstream end of the neck portion is continued the sheet forming section which is flared toward its downstream end. Therefore, the paste-form extrusion mass can be extruded in the state of a laminar flow without causing any turbulent flow, it being thus possible to equalize the thickness of individual layers of the intended multi-layer molded article. For the paste-form extrusion mass to be placed in the cylinder, a multi-layer preformed mass prepared earlier so as to match the mass receiving space in the cylinder is used. This multi-layer preformed mass may be such that layers corresponding in thickness to individual layers are place on over another to form the preformed mass. It is possible to produce through extrusion a sheet-form multi-layer molded article having layers corresponding in thickness to individual layers of such multi-layer preformed mass. Therefore, tile required multi-layer preformed mass can readily be prepared, which will contribute to improved productivity. This in turn makes it easy to positively equalize the thickness of individual layers of the multi-layers of the multi-layer molded article to be produced.

As stated above, according to the invention, the space within the cylinder in which the extrusion mass in paste form is placed has a rectangular section across the axis thereof, and the drawing section and the neck portion, both having a rectangular section across their respective axes, extend in continuation to the cylinder. The flared sheet forming section extends in continuation to the downstream end of the neck portion. Therefore, as the extrusion mass in paste form for producing the intended multi-layer molded article is extruded by being pressed by the ram, it is molded into shape in the state of laminar flow. Thus, individual layers of the resulting multi-layer molded article can be equalized in thickness along the direction of extrusion. The multi-layer preformed mass, as the extrusion mass in paste form, may be prepared by placing individual layers one over another in corresponding relation to the thickness of individual layers of the multi-layer molded article to be produced. Preparation of such multi-layer preformed mass can be done with far much greater ease than that of a circular cylinder-shaped multi-layer preformed mass as according to the prior art technique. Furthermore, individual layers of the multi-layer molded article to be produced can be precisely equalized in thickness with greater ease.

In a preferred embodiment, the housing space, the drawing section, and the neck portion have an axis on a straight line including an axis of the sheet forming section.

In another preferred embodiment, an outlet portion in distance being constant is formed in downstream of a front end portion of the sheet forming section, the outlet portion having a predetermined length in the direction of extrusion, and a front end of the outlet portion there is formed a stepped portion across the distance of the outlet portion.

In still another preferred embodiment, the die is made of steel and an interior of the die is chrome plated.

BRIEF DESCRIPTION OF THE DRAWINGS

Other and further objects, features, and advantages of the invention will be more explicit from the following detailed description taken with reference to the drawings wherein:

Fig. 1 is a sectional view showing one embodiment of the invention;

Fig. 2 is a plan view of an extrusion molding die 1 shown in Fig. 1;

Fig. 3 is a section taken along line III - III in Fig. 2;

Fig. 4 is a sectional view showing the extrusion molding die being employed in extrusion molding operation; Fig. 5 is a section taken along line V - V in Fig. 1 which shows the vicinity of a front end portion 11 of a sheet forming section 5;

Fig. 6 is a view showing the procedure for preparation of a multi-layer preformed mass 7;

Fig. 7 is a sectional view showing another embodiment of the invention; and Fig. 8 is a plan view showing a further embodiment of the invention.

DETAILED DESCRIPTION OF THE PREFERRED EMBODIMENTS

Now referring to the drawing, preferred embodiments of the invention are described below.

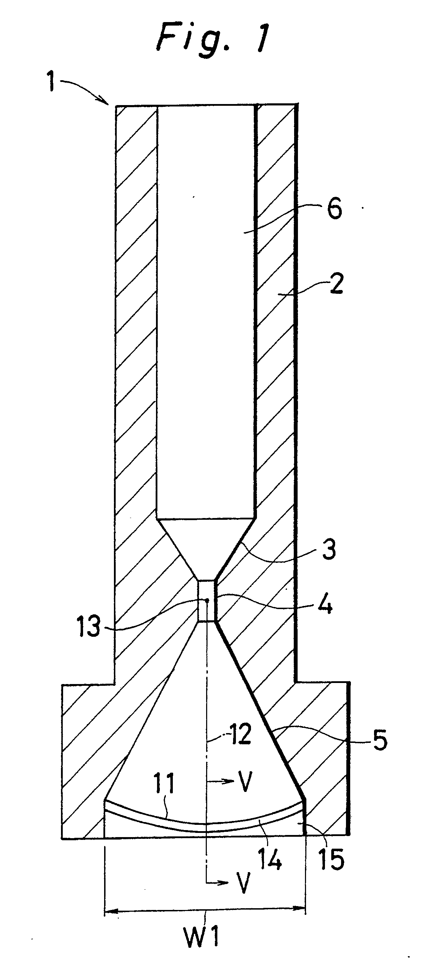

Fig. 1 is a sectional view showing one embodiment of the invention, and

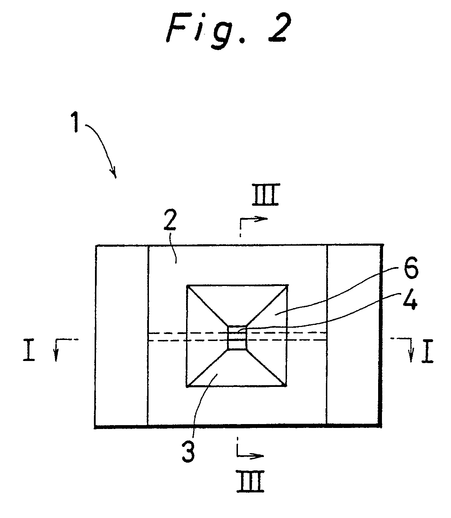

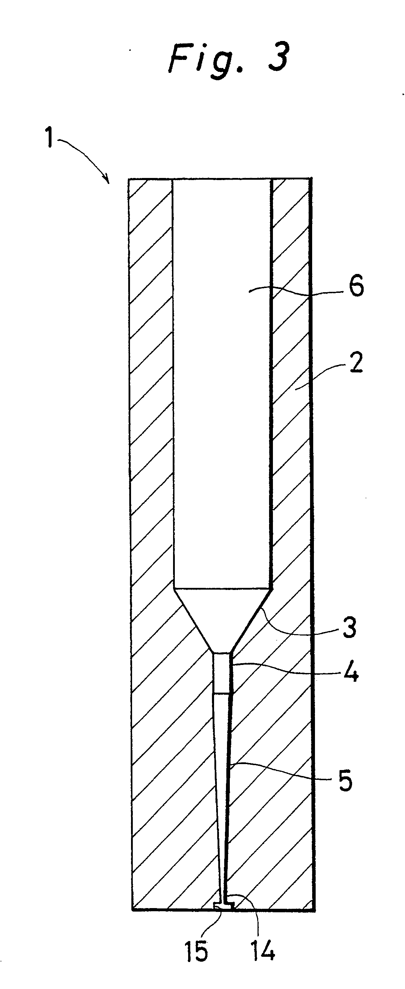

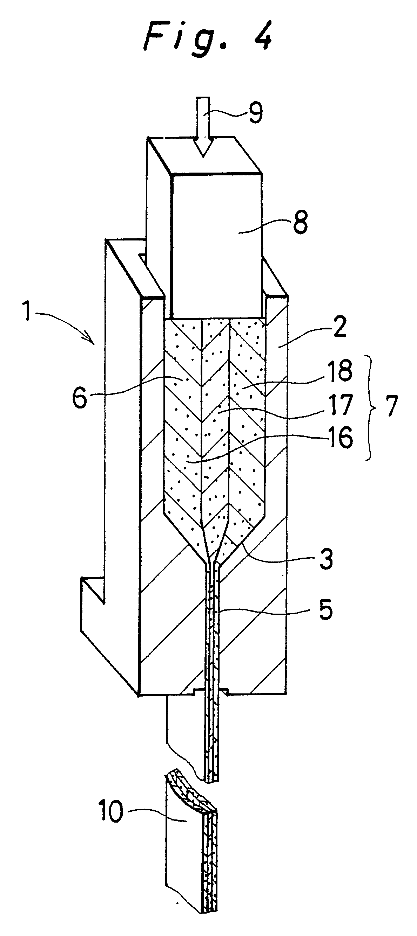

Fig. 2 is a plan view taken from the top in Fig. 1, a section taken along line I - I in Fig. 2 being shown in Fig. 1. Fig. 3 is a section taken along line III - III in Fig. 2. Referring to these drawings, the extrusion molding die 1 basically includes a cylinder 2, a drawing section 3 extending in continuation to the downstream end of the cylinder, a neck portion 4 extending in continuation to the downstream end of the drawing section 3, and a sheet forming section 5 extending in continuation to the downstream end of the neck portion 4. A multi-layer preformed mass or paste-form extrusion mass 7 shown in Fig. 4 is housed in a housing space 6 of the cylinder 2, and a hydraulically actuated ram 8 is pressed in the direction of arrow 9, whereby a sheet-form multi-layer molded article 10 is obtained. The die 1 is steel made and its interior is chrome plated. The cylinder 2 is rectangular in its section taken across its axis; for example, it is a square with each side 50 mm long. The drawing section 3, which extends in continuation to the downstream end of the cylinder 2, is tapered toward its downstream end and has a rectangular section across its axis which is square, for example; and it has a quadrangular pyramid-shaped space. The neck portion 4 continued from the downstream end of the drawing section 3 has a rectangular section across the axis thereof which is a square with each side 10 mm long, for example, in this embodiment.

The sheet forming section 5 extends in continuation to the downstream end of the neck portion 4 and is flared toward its downstream end. Its front end portion 11 is arc-shaped about point 13 on axis 12. The housing space 6 of the cylinder 2, drawing section 3, and neck portion 4 have an axis on a straight line including the axis 12 of the sheet forming section 5.

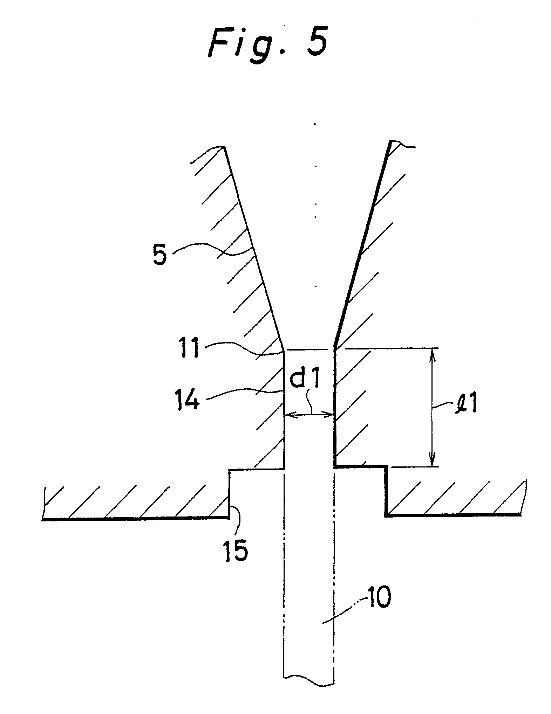

As is shown clearly in Fig. 5, an outlet portion 14 in which distance $d_1$ is constant is defined downstream of the front end portion 11 of the sheet forming section 5, the outlet portion 14 having a predetermined length $f_{11}$ in the direction of extrusion. At the front end of the outlet 0 portion 14 there is formed a stepped portion 15 extended across the spacing $d_1$ of the outlet portion 14. In this embodiment, by way of example, $d_1$ = 2 mm; $\ell_1$ = 5 mm; and width $W_1$ of front end portion 11 of the sheet forming section 5 = 100 mm.

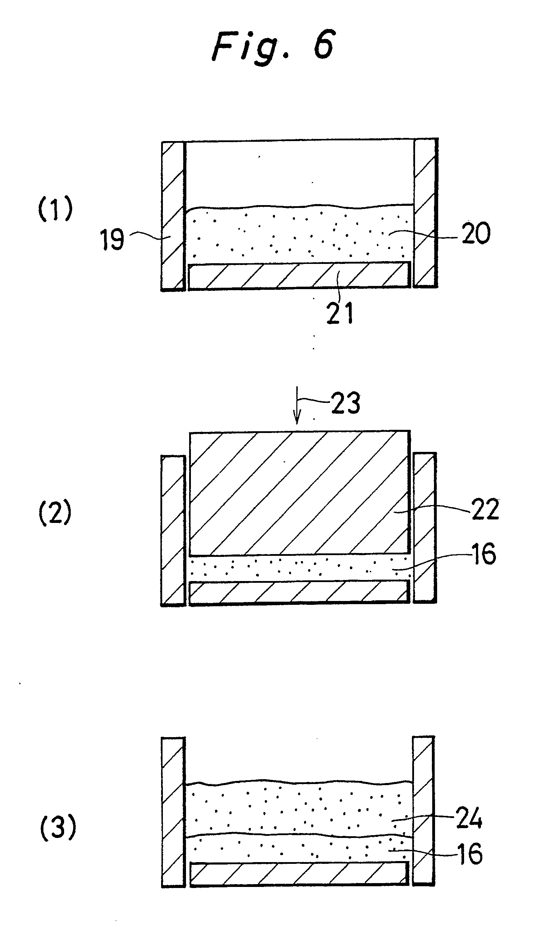

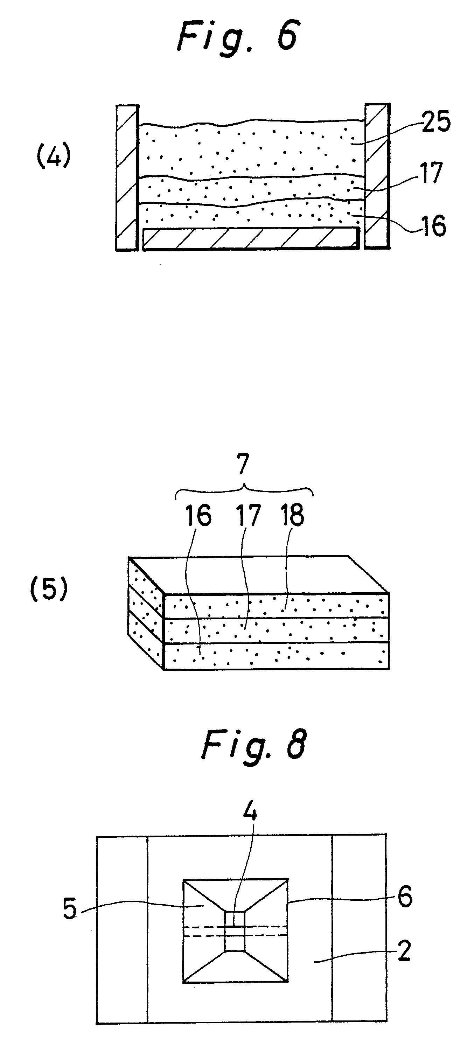

Referring now to Fig. 6, steps for preparing a multilayer preformed mass 7 will be described. The multi-layer preformed mass 7 consists of a first layer 16, a second layer 16, a second layer 17 and a third layer 18 which are comprised of three PTFE paste masses. These layers 16 to 18 can be produced from fine power prepared by emulsion polymerization of PTFE, with addition thereto of an extrusion assistant, such as solvent naphtha or white oil, and a colorant or the like. As shown in Fig. 6 (1), a PTFE paste mass 20 for obtaining the first layer 16 is first placed in cubic form on a lower die 21 and then, as shown in Fig. 6 (2), an upper die 22 is pressed in the direction of arrow 23. In this way, the first layer 16 is formed.

Nextly, the upper die 22 is removed and, as shown in Fig. 6 (3), a PTFE paste mass 24 for forming the second layer 17 is placed in position and is compressed by using the upper die 22 in same manner as shown in Fig. 6 (2), and the second layer 17 is thus formed on the first layer 16 as shown in Fig. 6 (4).

Subsequently, a PTFE paste mass 25 for forming the third layer 18 is placed in position, and compression is effected by means of the upper die 22. Thus, finally, as shown in Fig. 6 (5), a multi-layer preformed mass 7 having first, second, and third layers 16, 17, 18is produced. This preformed mass 7 can be housed substantially neatly in the space 6 within the cylinder 2.

After the preformed mass 7 is placed in the cylinder 2, it is pressed by the ram 8 as shown in Fig. 4 as earlier mentioned. Thus, the preformed mass 7 is passed forward from the cylinder 2 and, after passing through the drawing section 3 and neck portion 4, it is extruded n laminar form; it is further passed through the sheet forming section 5 and led to the outlet portion 14, from which an eyongate belt-shaped multi-layer molded article 10 can be obtained. The thickness of individual layers of the multi-layer molded article 10 corresponds the thickness of individual layers 16 to 18 of the preformed mass 7, and is uniform in the direction of extrusion.

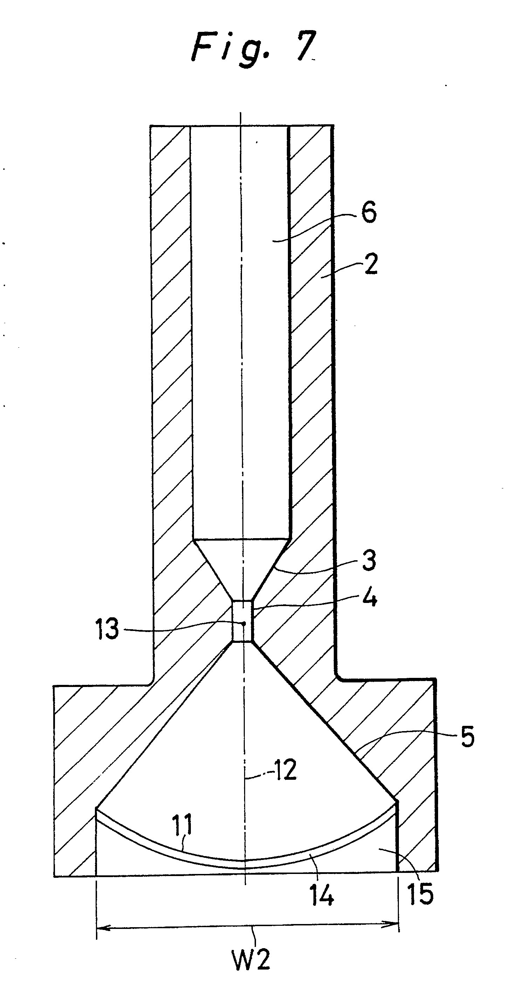

Fig. 7 is a sectional view of another embodiment of the invention which corresponds to Fig. 1. This embodiment is similar to the foregoing embodiment. In this embodiment, width W2 of the sheet forming section 5 is 150 mm. Other configurational features of the embodiment are similar to those of the first mentioned embodiment, with like parts designated by identical numerals.

Fig. 8 is a plan view of a further embodiment of the invention, which corresponds to Fig. 2. In this embodiment, the neck portion 4 has an oblong configuration, and the drawing section 3 continues from a space having a square sectional configuration of the cylinder 2 the neck portion 4 having a rectangular sectional shape, the interior of the drawing section 3 being quadrangular pyramid shaped.

The material of each paste-form extrusion mass is not limited to PTFE; it may be ceramic or a synthetic resin material, such as vinyl chloride. Other paste-form material may also be used as such.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. An extrusion molding die comprising:
a cylinder (2) being formed in a housing space (6) having a rectangular section across its axis for receiving therein a paste-form extrusion mass to be pressed by a ram (8) ;
a drawing section (3) continued from the downstream end of the housing space (6) and having a rectangular section across its axis, the drawing section (3) being tapered toward its downstream end;
a neck portion (4) continued from the downstream end of the drawing section (3) and having a rectangular section across its axis; and
a sheet forming section (5) continued from the downstream end of the neck portion (4) and flared toward the downstream end.

2. An extrusion molding die as claimed in claim 1, wherein the housing space (6), the drawing section (3), and the neck portion (4) have an axis on a straight line including an axis (12) of the sheet forming section (5).

3. An extrusion molding die as claimed in claim 1, wherein an outlet portion (14) in distance (d1) being constant is formed in downstream of a front end portion (11) of the sheet forming section (5), the outlet portion (14) having a predetermined length ($\ell$1) in the direction of extrusion, and a front end of the outlet portion (14) there is formed a stepped portion (15) across the distance (d1) of the outlet portion (14).

4. An extrusion molding die as claimed in claim 1, wherein the die (1) is made of steel and an interior of the die (1) is chrome plated.

# Fig. 1

# Fig. 2

# Fig. 3

# Fig. 4

# Fig. 5

# Fig. 6

(1)

(2)

(3)

# Fig. 6

(4)

25
17
16

7
16 17 18

(5)

# Fig. 8

4
5
6
2

# Fig. 7